# EUROPEAN PATENT APPLICATION

(11) **EP 1 059 769 A1**
(43) Date of publication of application: **13.12.2000**
(21) Application number: 99973367.8
(22) Date of filing: 07.12.1999
(51) Int. Cl.: H04L 12/28

(54) **METHOD AND APPARATUS FOR NETWORK CONTROL**

(30) Priority: 07.12.1998 JP 34734298
(71) Applicant: Sony Corporation, Tokyo 141-0001 (JP)
(72) Inventor: AOKI, Yukihiko, Sony Corporation, Tokyo 141-0001 (JP)
(74) Representative: Körber, Martin, Dipl.-Phys.
(86) International application number: JP9906857
(87) International publication number: WO0035148

(57) **Abstract**

In a controller for controlling plural target devices caused to be of network structure by IEEE 1394, there are included list of FCMs which are control minimum unit, dispatcher for carrying out registration/management of leading addresses of the FCMs, list in which characteristics of the target devices, etc. are stored, DCM for generating set of desired FCMs from the list in correspondence with the required control content, and application for controlling target devices on the basis of the set. Thus, even when the content of application is changed, it can be prevented that the target devices do not function and the functions thereof are wasteful. As a result, resources can be effectively utilized and the entirety of the system can be improved. Thus, operability easy to use can be realized.

## Description

### Technical Field

This invention relates to a network control method and a network control apparatus suitable in carrying out management and control of plural equipments caused to be of network structure by, e.g., the so-called Ethernet or IEEE (Institute of Electrical and Electronics Engineers) 1394, etc.

### Background Art

Hitherto, in the case where plural equipments are caused to be of network structure by, e.g, the so-called Ethernet or IEEE 1394, etc., there are many instances where there exist, on this network, equipment capable of controlling other equipments (hereinafter referred to as controller) and other equipments controlled by such controller (hereinafter referred to as target device).

In the case where controller and target devices exist on the network in this way, when controller controls target device, this controller transmits control signal (command) to the target device via the network. Thus, when the target device receives the control signal, it becomes operative in accordance with the content of that control signal to notify that result to the controller.

However, in order to realize such a fact that the controller controls the target device via the network as described above, the target device must have in advance the function related to a specific application software (hereinafter simply referred to as application) of the controller.

For this reason, in such cases that, e.g., the content of the application of the controller is changed, when the target device dose not cope with the application thus changed, there are many instances where, in the target device, it becomes impossible to execute the function of the application of which content has been changed, and/or functions which are not used take place, resulting in wastefulness.

Further, in such cases that, e.g., the number of target devices that the controller controls is increased, a larger number of resources are required in the controller, and cost is increased when those all resources are provided. On the other hand, although the number of resources can be decreased, only limited use can be made in this case.

In addition, there also exist applications in which functions which are not required are assigned uselessly to resources. In this case, the efficiency of the entirety of the system becomes poor, resulting in that there is lack affinity with user.

Such facts as described above constitute inconsistent condition for application with a view to providing operability easy to use by the limited resources as in, e.g., home electric equipments.

### Disclosure of the Invention

This invention has been made in view of such circumstances, and its object is to provide a network control method and a network control apparatus in which even if the content of application is changed, it is prevented that function of target device becomes inoperative or is useless, and can effectively utilize resources so that the efficiency of the entirety of the system is improved, thus to realize operability easy to use.

A network control method of this invention is directed to a network control method for controlling plural equipments caused to be of network structure, wherein plural unit control information to execute function of minimum unit of control are prepared to generate a set of desired unit control information from the plural unit control information in correspondence with required control content to control the equipments to be controlled on the basis of the set of the unit control information.

In this case, in the network control method of this invention, only when control of equipment to be controlled is started, the set is generated in correspondence with the required control content, and when control of the equipment to be controlled is completed, the set is released.

Moreover, in the network control method of this invention, during execution of control of the equipment to be controlled, new generation of the set and release of the set newly generated are carried out as occasion demands.

Further, in the network control method of this invention, priority rank is defined in advance with respect to the plural unit control information to carry out generation of the set in accordance with the priority rank, and release of the set thus generated in accordance with the rank opposite to the priority rank.

In addition, in the network control method of this invention, the sets for respectively controlling plural respective equipments to be controlled are generated individually every the respective equipments to be controlled, or are generated in the state where they are subdivided into sets consisting of unit control information that the respective equipments to be controlled share and other sets.

A network control apparatus of this invention is directed to a network control apparatus adapted for controlling plural equipments caused to be of network structure, the apparatus comprising storage means for storing plural unit control information to execute function of the minimum unit of control, acquisition means for acquiring required control content through the network, set generating means for generating set of desired unit control information from the plural unit control information stored in the storage means in correspondence with the acquired and required control content, and control means for controlling the equipments to be controlled on the basis of the set of the unit control information.

In this case, in the set generating means, only when control of the equipment to be controlled is started, the set is generated in correspondence with the required control content, and when control of the equipment to be controlled is completed, the set is released.

Moreover, the set generating means carries out new generation of the set and release of the set newly generated as occasion demands during execution of control of the equipment to be controlled.

Further, the set generating means defines priority rank in advance with respect to the plural unit control information to carry out generation of the set in accordance with the priority rank and release of the set thus generated in accordance with the rank opposite to the priority rank.

In addition, the set generating means individually generates, every the respective equipments to be controlled, the sets for respectively controlling plural respective equipments to be controlled, or generates sets in the state where they are subdivided into sets consisting of unit control information that the respective equipments to be controlled share and other sets.

### Brief Description of the Drawings

FIG. 1 is a block diagram showing an example of the system configuration of a first embodiment of this invention.
FIG. 2 is a block diagram showing an example of the system configuration of a second embodiment of this invention.
FIG. 3 is a flowchart showing flow until function component modules required at application are assigned in controller of the system of the embodiment of this invention.
FIG. 4 is a flowchart showing flow of processing after start of execution of application in the controller of the system of the embodiment of this invention.
FIG. 5 is a block diagram showing an example of the system configuration of a third embodiment of this invention.
FIG. 6 is a block diagram showing an example of the system configuration of a fourth embodiment of this invention.
FIG. 7 is block diagram showing an example of the system configuration of a fifth embodiment of this invention.

### Best Mode for Carrying Out the Invention

Preferred embodiments of this invention will now be described with reference to the attached drawings.

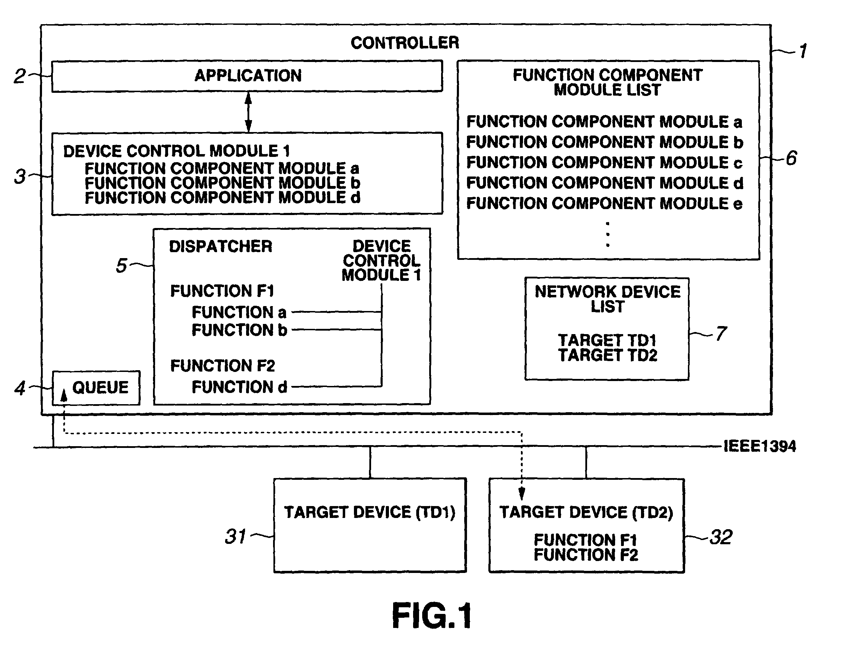

FIG. 1 shows an example of the system configuration of the first embodiment to which a network control method and a network control apparatus of this invention are applied. In the following embodiment, there is mentioned the case where IEEE 1394 is used as an example of means for constituting network.

In this FIG. 1, controller 1 comprises application 2, Device Control Module (DCM) 3, function component module list 6, network device list 7, queue 4, dispatcher 5.

Function Component Modules (FCMs) listed at the function component module list 6 are modules obtained by dividing/subdividing functions of equipments to be controlled, and IDs of divided/subdivided functions and a method of controlling thereof are defined. Namely, function component module corresponds to the function of the minimum unit of the controller 1 and is prepared in a form of software or hardware. In this example, in the case where such function component module is prepared as software, it is mounted as ROM in a certain address space, and in the case where such function component module is prepared as hardware, driver software for operating its hardware or internal register within hardware is prepared in a certain address space. In this function component module list 6, at least leading addresses and labels are caused to respectively correspond to plural respective function component modules a, b, c, d, e, ···. Accordingly, by designating desired leading address and label of those respective leading addresses and labels, it becomes possible to select desired one of respective function component modules a, b, c, d, e, ···. Namely, at the function component module list 6, substances of Function Component Modules (FCMs) are stored in a listed form.

The above-mentioned Device Control Module (DCM) 3 is module obtained by abstracting equipment to be controlled, and defines what control equipment to be controlled can be carried out, wherein IDs of function component modules corresponding to that control are assigned. In the logic model, the device control module is constituted by function component modules. Further, this device control module 3 carries out confirmation of function that application 2 requests and judgment of content of event from the network. In the case of FIG. 1, IDs of function component modules a, b, d are assigned as an example to the device control module 3.

On the other hand, the dispatcher 5 is adapted so that processing program for actually carrying out control is assigned thereto, wherein function information F1, F2, ··· including leading addresses and labels of the function component modules are registered. This dispatcher 5 carries out task (control process) scheduling of processing for which request is made and optimization of resource assignment. In the case of the example of FIG. 1, in the dispatcher 5, information with respect to function component modules a, b are registered as function information F1, and information with respect to function component module d is registered as function information F2. Thus, the dispatcher 5 selects the registered function information by request of application 2 to thereby select function of desired function component module. In addition, the dispatcher 5 carries out transaction management by directly using commands through the network in accordance with request of the device control module.

The queue 4 holds information of the request or event.

The application 2 carries out control request with respect to the device control module 3. At this time, the device control module 3 understands requested control to select function component module in correspondence therewith to request that function component module to carry out processing. Moreover, at this time, the dispatcher 5 carries out transaction processing of communication by actually using control commands to notify its result to the device control module 3 at the time point when that transaction processing is completed and the device control module 3 notifies its content to the application.

The mechanism as stated above is adapted so that the application 2 carries out communication to the equipment to be controlled by directly using commands so that useless or wasteful communication traffic is not increased.

Network device list 7 collects, via network, information relating to characteristics and performances of respective target devices (hereinafter referred to as target information TD) existing on the network to make list thereof. In the example of FIG. 1, there are shown only two target devices 31, 32 of plural target devices existing on the network, and target information of the target device 31 is indicated as TD1 and target information of the target device 32 is indicated as TD2.

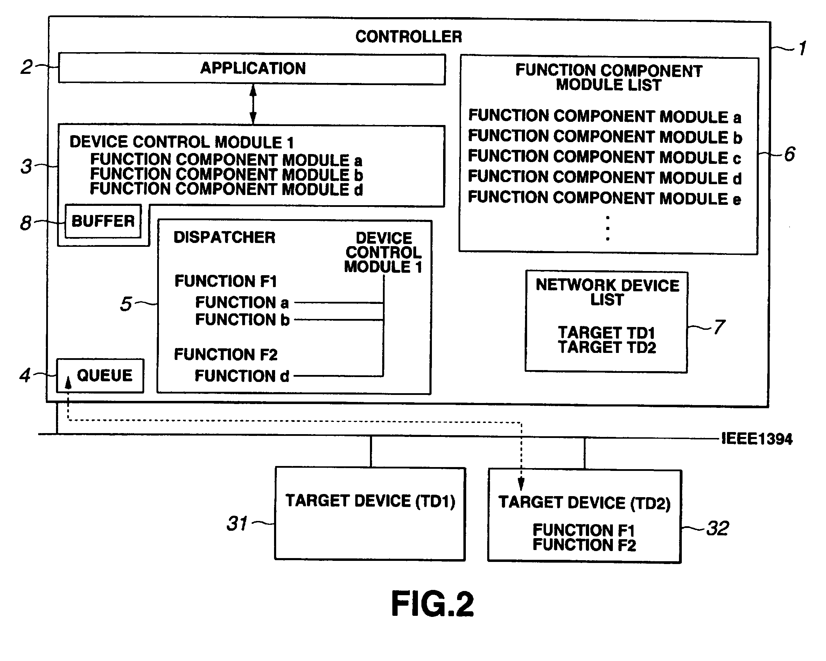

While there is mentioned the example where the system of FIG. 1comprises device control module 3, dispatcher 5 and queue 4, in such cases that, e.g., it is necessary to know or recognize state of target device, as a second embodiment of this invention, a buffer 8 for holding states of respective function component modules may be provided as shown in FIG. 2. It is to be noted that the same reference numerals are respectively attached to the same components as those of FIG. 1 and their explanation is omitted.

Namely, the system of the second embodiment shown in this FIG. 2 is directed to the example where there is provided function to periodically examine the state of target device in order that the device control module 3 is not dependent upon communication time of the network to store its information into the buffer 8 to answer information in the buffer 8 at the time of inquiry from the application 2. In this case, it should be noted that resource such as buffer, etc. is additionally required.

On the other hand, in the case where application 2 only controls target device and there is no necessity of recognizing the state of the target device as varied with passage of time, such an approach may be employed, as shown in FIG 1, to register only function information of function component module that the target device inquires, thus making it possible to provide low cost and simple system configuration in which there is no necessity to mount buffer 8 as shown in FIG. 2.

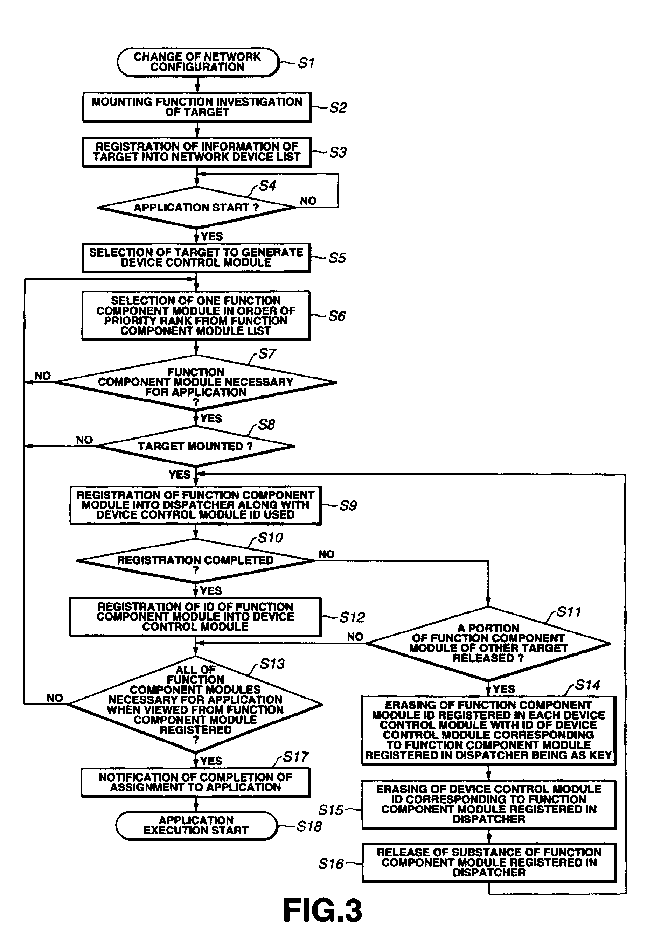

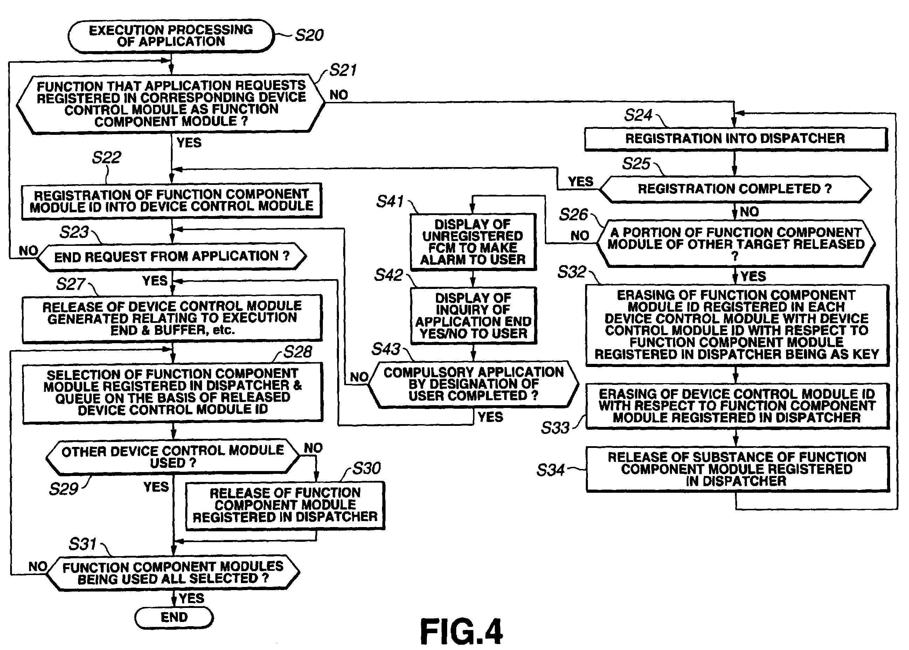

In FIGS. 3, 4, in the system of the embodiment of this invention, there is shown a more practical example (flowchart) of process in which the controller 1 generates module of virtual (abstracted) target device as device control module 3 to assign thereto function component module requested at the application 2 to indicate change state from execution start until execution end of the application 2, and process of release of its function component module and release of device control module. It should be noted that flowcharts of FIGS. 3 and 4 should be primarily indicated as single flowchart, but are divided into two figures (drawings) for convenience of paper.

In these FIGS. 3 and 4, when the controller 1 first detects at step S1 that configuration of the network is varied, processing proceeds to processing of the subsequent step S2.

The controller 1 investigates, as target information TD, additional information such as function that the target devices mounts, name of maker and name of product, etc. at step S2.

Moreover, the controller 1 registers and holds, as step S3, at network device list 7, target information TD obtained at the work of the step S2. In this example, at this time point, generation of the device control module 3 is not carried out.

Then, the controller 1 judges, as step S4, whether or not start of application 2 is carried out by user. When it is judged that the application 2 is started, the processing proceeds to processing of step S5.

When the processing proceeds to the processing of the step S5, the controller 1 selects target device to be controlled by the application 2 on the basis of target information TD of the network device list 7 thereafter to generate device control module 3 of target device to be controlled. Thus, the processing proceeds to processing of step S6.

When processing proceeds to the processing of step S6, the controller 1 selects, in higher rank of priority rank, one function component module 6 from the function component module list 6 in correspondence with the target information and the own resource. At this time, assignment of buffer 8 of FIG. 2 is also carried out as occasion demands.

Then, the controller 1 judges, as step S7, whether or not the selected function component module is required for the application 2 (whether or not it is conformity with request of the application 2). Thus, when such function component module is not required, processing returns to the processing of the step S6. When it is required, processing proceeds to processing of step S8.

When the processing proceeds to the processing of the step S8, the controller 1 carries out judgment as to whether or not the target device has already mounted the function of that function component module. In the case where the target device has already mounted such module function in the judgment of this step S8, processing proceeds to processing of step S9. On the other hand, in the case where it is judged that the target device does not mount it, processing returns to the processing of the step S6.

When processing proceeds to the processing of the step S9, the controller 1 registers, into the dispatcher 5, as function information, leading address and label of the function component module selected at the step S6 along with device control module ID used. Namely, in the case where the controller 1 registers necessary function component module into the dispatcher 5, it carries out assignment of the buffer 8 and queue 4 as occasion demands to also further necessarily register device control module ID. Thus, the device control module used becomes clear. Further, into the device control module 3, function component module ID registered in the dispatcher 5 is registered.

By the processing until now, in the device control module 3 and the dispatcher 5, function component modules are registered in order of priority rank from the function component module list 6.

In this case, since there are instances where registration into the dispatcher 5 and assignment to the buffer 8 cannot be carried out, e.g., for the reason of shortage of resource, the controller 1 judges whether or not registration into the dispatcher 5 (assignment in the case where assignment to the buffer 8 is required) is completed as step S10 simultaneously with the step S9. In the case where it is judged at this step S10 that registration into the dispatcher 5 (assignment to the buffer 8 as occasion demands) has been completed, processing by the controller 1 proceeds to step S12.

When the processing proceeds to the processing of the step S12, the controller 1 registers ID of function component module into the device control module 3. The processing then proceeds to processing of step S13.

On the other band, in the case where it is judged at the step S10 that registration (assignment) is not completed (in the case where there is function in which registration and/or assignment cannot be carried out), processing by the controller 1 proceeds processing of step S11 to release function of lower priority rank assigned to another target device to be controlled to carry out assignment work for a second time. It is to be noted that there are instances where registration into dispatcher 5 and/or assignment to buffer 8 cannot be carried out for the reason such as shortage of resource, etc., the controller 1 may issue alarm indicating that fact to complete such registration or assignment work.

When the processing by the controller 1 proceeds to the processing of the step S11, the controller 1 judges as to whether or not it is possible to release lower order function of the priority rank assigned to another target device (function component module). As a result, when, e.g., release operation can be made and it is determined that this function is released, processing by the controller 1 proceeds to step S14 and steps subsequent thereto to release function of its function component module thereafter to return to the step S9.

Namely, when processing by the controller 1 proceeds to processing of step S14, the controller 1 erases unnecessary function component module ID registered at each device control module with the device control module ID corresponding to function component module registered at the dispatcher 5 being as key.

Then, the controller 1 erases, as processing of step S15, device control module ID corresponding to function component module registered in the dispatcher 5. Namely, the controller 1 is operative so that only in the case where all function component modules that the device control module carries out management become unnecessary, it erases corresponding device control module ID.

Thereafter, the controller 1 releases, as processing of step S16, substances of function component modules registered at the dispatcher 5. Then, the processing by the controller 1 returns to the processing of the step S9.

On the other hand, in the case where it is judged at step S11 that substance of corresponding function component module is not released, the processing by the controller 1 proceeds to processing of step S13.

When the processing by the controller 1 proceeds to the processing of the step S13, the controller 1 carries out judgment as to whether or not function component modules necessary for application when viewed from the function component module are all selected and are registered (i.e., whether or not set of function component modules can be generated). As a result, when all modules are not yet selected, the processing by the controller 1 returns to the processing of the step S6. On the other hand, when all modules have been selected, the processing by the controller 1 proceeds to processing of step S17. It is to be noted that, as described above, in registering function information into the device control module 3, without employing an approach to select, one by one, function component modules from the function component module list 6 to carry Out judgment, there may be employed such an approach to register (assign), in a collective manner, only related function information of function component module of the highest priority rank on the basis of additional information of target device registered in, e.g., network device list 7 (e.g., target information stored in tape media). In this case, in the case where there is no function information that the application 2 requires, it is sufficient to carry out supplementary assignment when required.

The controller 1 carries out notification to the effect that registration procedure has been completed to the application 2 as the processing of step S17 at the time point when function component modules necessary for the application 2 are all registered in the device control module 3 and the dispatcher 5, or at the time when all function component modules are selected from the function component module list 6. It is to be noted that, as this notification, it is also possible to carry out notification in the state where whether, e.g., function component modules necessary for application 2 have been all registered or have not been registered is discriminated. After notification of registration procedure completion is carried out at the step S17, the processing by the controller 1 shifts to application execution start processing as processing of step S18 (step S20 of FIG. 4).

When the controller 1 starts execution processing of application, it judges whether or not there exists function information of unregistered function component module as processing of step S21 of FIG. 4. Namely, whether or not function component module that the application 2 requests is registered as function component module in corresponding device control module 3 is judged. In the case where, at the processing of this step S21, there exists function information of unregistered function component module, processing by the controller 1 proceeds to processing of step S24. On the other hand, in the case where there does not exist function information of unregistered function component module, the processing by the controller 1 proceeds to processing of the step S22.

When the processing by the controller 1 proceeds to the processing of the step S22, the controller 1 registers ID of function component module into the device control module 3. Then, the processing by the controller 1 proceeds to processing of step S23.

On the other hand, when it is judged at the processing of step S21 that unregistered function component module exists, the controller 1 directly up-loads function information of that unregistered function component module from equipment to be controlled (target device) to thereby register it into the dispatcher 5.

Thereafter, the controller 1 judges, as processing of step S25, whether or not registration has been completed. As a result, when registration has been completed, processing by the controller 1 proceeds to the processing of the step S22. On the other hand, when registration is not completed, the processing by the controller 1 proceeds to processing of step S26.

When the processing by the controller 1 proceeds to the processing of the step S26, the controller 1 judges whether or not function of lower priority rank assigned to another target device (function component module) can be released. For example, when the controller 1 judges that release can be made and it is determined that this function is released, the processing by the controller 1 proceeds to the processing of the step S32 and steps subsequent thereto to release the function of that function component module. Thereafter, the processing by the controller 1 returns to the step S24.

Namely, when the processing by the controller 1 proceeds to the processing of the step S32, the controller 1 erases function component module ID registered in each device control module with device control module ID corresponding to function component module registered in the dispatcher 5 being as key.

Then, the controller 1 erases, as processing of step S33, device control module ID corresponding to function component module registered in the dispatcher 5. Namely, only in the case where all function component modules that the device control module carries out management become unnecessary, the controller 1 erases its device control module ID.

Thereafter, the controller 1 releases, as processing of step S34, substances of function component modules registered in the dispatcher 5. Then, the processing by the controller 1 returns to the processing of the step S24.

On the other hand, in the case where it is judged at the step S26 that function component module is not released, the processing by the controller 1 proceeds to processing of step S41 to make alarm, to user, that there exists unregistered function component module in the device control module and the dispatcher to inquire at step S42 whether or not user completes application.

Then, the controller 1 judges, as step S43, whether or not compulsory end of application by designation of user is carried out. As a result, in the case of compulsory end, the processing by the controller 1 proceeds to processing of step S27. On the other hand, in the case where compulsory end is not carried out, the processing by the controller 1 proceeds to the processing of the step S23.

Here, in the case where it is judged at the step S21 that unregistered function information does not exist and registration is made at the step S22, device control module, i.e., virtual module of target device is generated. Thus, application is executed. At the controller 1, execution of this application is started. Thus, when designation by the label is carried out as request from the application 2, corresponding function component module is selected from the function component module list 6 by leading address corresponding to label of the registered function information. Thus, control process is started at the corresponding function component module.

When processing by the controller 1 proceeds to processing of step S23 after execution of application is started in this way, the controller 1 judges whether or not execution of application is completed. As a result, when it is judged that application by user operation has been completed, the processing by the controller 1 proceeds to processing of step S27. On the other hand, when it is judged that the application is being executed, the processing by the controller 1 returns to the processing of the step S21.

In the case where it is judged at the step S23 that execution of the application has been completed, i.e., in the case where it is judged that control of target device becomes unnecessary, the controller 1 releases, as processing of the step S27, information of device control module 3 and buffer 8, etc. which have been already generated in relation to application execution end. Namely, the controller 1 all releases function information registered in the dispatcher 5, information assigned to the buffer 8, and information held in the queue 4. It is to be noted that while in the case where control of the target device becomes unnecessary, the contents of device control module 3 with respect to that target device can be all released, there may be provided such a function to preserve or store, in the network device list 7, information indicating function component module already assigned in order that the device control module 3 can immediately function when the application requires for a second time.

Thereafter, the controller 1 selects, as processing of step S28, function component module registered in the dispatcher 5 and queue on the basis of device control module ID released at step S27 to judge, as processing of the subsequent step S29, whether or not they are used by other device control module 3.

In the case where it is judged at the step S29 that other device control module uses such function component module, etc.., the controller 1 judges, as processing of step S31, whether or not function component modules which have been used are all selected. As a result, in the case where function component modules are all selected, the processing is completed. On the other hand, in the case where function component modules are not all selected, the processing returns to the processing of the step S28.

Moreover, in the case where it is judged at step S29 that other device control module dose not use such function module, etc., the controller 1 releases, as processing of step S30, function component module registered in the dispatcher 5. The processing by the controller 1 then proceeds to processing of step S31.

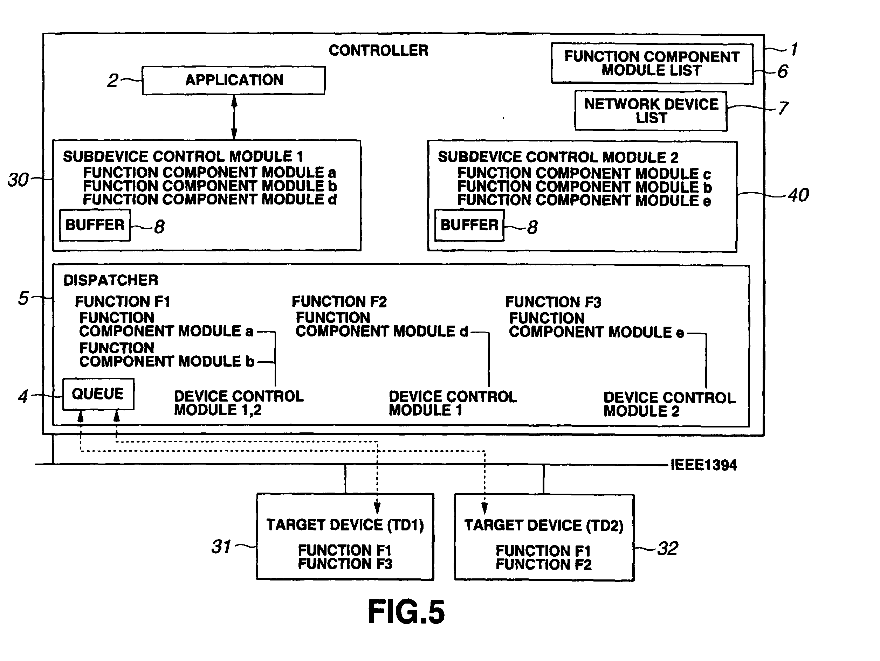

Now, the configuration of a third embodiment of this invention is shown in FIG. 5. It is to be noted that, in FIG. 5, the same reference numerals are respectively attached to the same components as those of the previously described embodiments, and their explanation will be omitted.

In the system of the third embodiment shown in FIG. 5, the device control module is divided into modules 30, 40 and these modules 30, 40 respectively control target devices. Namely, in such cases that, e.g., plural applications control only an equipment to be controlled at the same time, management of that control can be also unitarily carried out within the controller 1 in this invention.

Explanation will be given by taking the example in connection with the case, e.g., an application controls two VCRs (Video Cassette Recorders). As the device control module at this time, there exist two device control modules (e.g., modules 30, 40) and these two device control modules separately carry out management of the two VCRs. Accordingly, in respective device control modules in this case, how these two VCRs are controlled is defined by assignment of ID of function component module. In addition, at this time, leading address of the function component module is assigned to the dispatcher 5.

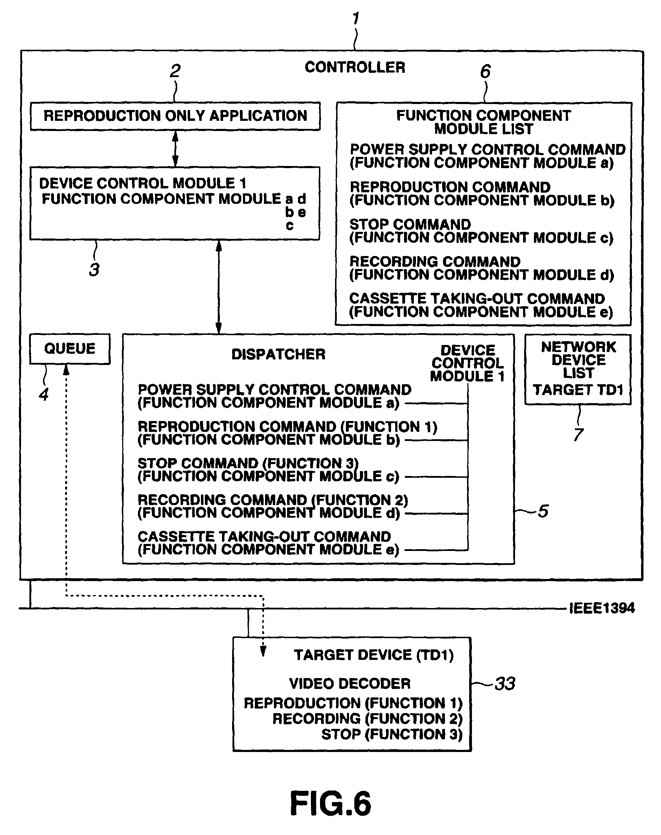

Now, the configuration of a fourth embodiment is shown in FIG. 6. It is to be noted that, in FIG. 6, the same reference numerals are respectively attached to the same components as those of the above-described embodiments, and their explanation will be omitted.

The configuration of the fourth embodiment shown in FIG. 6 is directed to the configuration in the case where, e.g., VCR 33 having recording/reproduction function is exemplified as target device and reproduction only application is caused to be operative as application 2 so that the controller 1 controls the VCR 33.

In the fourth embodiment, in the case where, e.g., controller 1 controls VCR 33 having recording/reproduction function as target device, reproduction only application is caused to be operative as application 2. In this case, the controller 1 generates device control module 3 having both reproduction and recording to register, into the dispatcher 5, function component modules of both reproduction and recording.

Namely, the controller 1 is operative so that when it recognizes VCR 33 as equipment to be controlled, it generates device control module 3 having functions of all function component modules relating to recording and reproduction corresponding to power supply command, reproduction command, stop command, recording command and/or cassette taking-out command, etc. mentioned in the function component module list 6 to assign function information of those respective function component modules to the dispatcher 5.

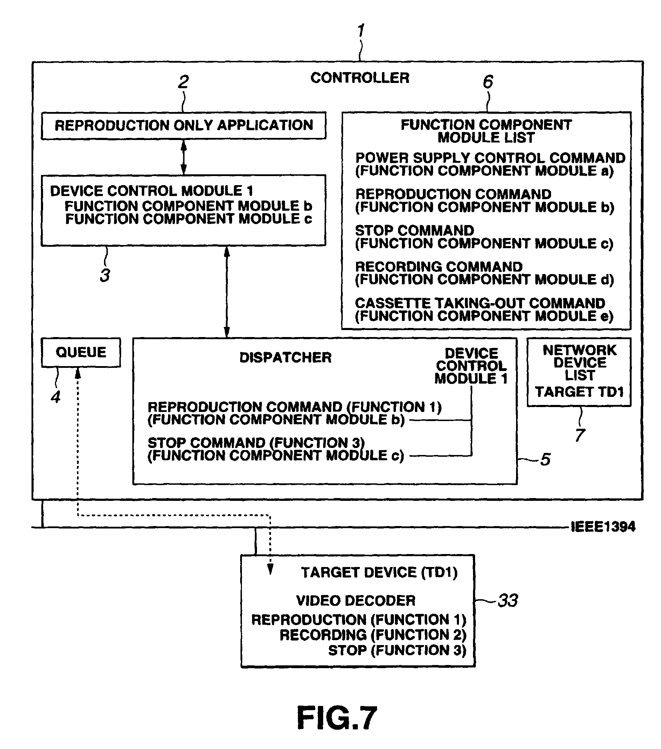

Now, the configuration of a fifth embodiment of this invention is shown in FIG. 7. It is to be noted that, in FIG. 7, the same reference numerals are respectively attached to the same components as those of the respective above-described embodiments, and their explanation will be omitted.

In this case, e.g., VCR 33 having recording/reproduction function is used as target device and reproduction only application is caused to be operative as application 2, whereby the controller 1 controls this VCR 33. In the case of the fifth embodiment, ones required for the reproduction only application are assigned to the internal of the controller 1.

Namely, in the case of the fifth embodiment, the controller 1 generates device control module 3 having only function component modules relating to reproduction function corresponding to reproduction command, stop command, etc. to register, into the dispatcher 5, only function information relating to this reproduction function.

In the case of the fifth embodiment shown in FIG. 7, when reproduction only application is started by user, generation of device control module and assignment to dispatcher of function component module are carried out. For example, the procedure is as follows.

Initially, as the first procedure, the controller 1 selects function component module relating to power supply control from the function component module list 6. It is to be noted that since this function is function which is not mounted at the VCR 33 which is target device, i.e., function which is not executed in the reproduction only application, assignment to the dispatcher 5 is not carried out.

As the second procedure, the controller 1 selects function component module relating to reproduction control from the function component module list 6. Since this function is function which is mounted in the VCR 33 and is function which can be executed by reproduction only application, the controller 1 assigns function component module relating to its reproduction control to the dispatcher 5.

As the third procedure, the controller 1 selects function component module relating to stop control from the function component module list 6. Since this function is function which is mounted in the VCR 33 and is function which can be executed by reproduction only application, the controller 1 assigns function component module relating to its stop control to the dispatcher 5.

As the forth procedure, the controller 1 selects function component module relating to recording control from the function component module list 6. It is to be noted that since this function is function which is mounted in the VCR 33 which is target device, but is not executed at the reproduction only application, assignment to the dispatcher 5 is not carried out.

Similarly, the controller 1 selects function component module relating to cassette taking-out control from the function component module list 6. It is to be noted that since this function is function which is not mounted in the VCR 33 which is target device and is not executed by the reproduction only application, assignment to the dispatcher 5 is not carried out.

As stated above, the controller 1 notifies, to the reproduction only application 2, that it can be executed when arrangement of the internal status is made. Thus, the reproduction only application is executed.

Thus, it is not required that the controller 1 carries out assignment of power supply control command, recording command, cassette taking-out command, etc. with respect to the dispatcher 5.

Thereafter, when the controller 1 receives end notification of reproduction only application, the controller 1 releases function component module and device control modules assigned to the dispatcher 5 if other application dose not use them.

As stated above, in the systems of the respective embodiments of this invention, such an approach is employed to abstract target devices connected on the network to handle them by device control module. Thus, the higher order layer such as application 2, etc. can uniformly utilize those devices. It is unnecessary to become conscious that corresponding devices are devices on the network and/or more practical configuration of hardware, software. Accordingly, in accordance with the respective embodiments of this invention, the controller 1 can control respective target devices while efficiently using own resource without specifying the number of target devices. In addition, since the device control module is abstracted module, even if substance is any one (e.g., tape format or kind of signals, etc.), handling can be made them irrespective thereof.

### Industrial Applicability

As apparent from the above-described explanation, in the network control method and the network control apparatus of this invention, since such an approach is employed to prepare plural unit control information to execute function of the minimum unit of control to generate set of desired unit control information in correspondence with required control content to control the equipment to be controlled on the basis of the set. Thus, even if, e.g., the content of application is changed, it can be prevented that the equipment to be controlled cannot function and/or is wasteful. In addition, resources can be effectively utilized so that efficiency of the entirety of the system is enhanced or improved. Thus, operability having good use convenience can be realized.

Namely, in accordance with this invention, equipments to be controlled can be controlled while efficiently using own resources without specifying the number of equipments to be controlled. In addition, since sets of unit control information are abstracted information, even if substance thereof is any one, handling can be made them irrespective thereof.

## Claims

1. A network control method for controlling plural equipments caused to be of network structure,
the method comprising:
preparing plural unit control information to execute function of minimum unit of control;
generating set of desired unit control information from the plural unit control information in correspondence with required control unit; and
controlling the equipments to be controlled on the basis of the set of the unit control information.

2. The network control method as set forth in clam 1,
wherein only when control of the equipments to be controlled is started, the set is generated in correspondence with the required control content, and
wherein when control of the equipment to be controlled is completed, the set is released.

3. The network control method as set forth in claim 1,
wherein, during execution of control of the equipments to be controlled, new generation of the set and release of the newly generated set are carried out as occasion demands.

4. The network control method as set forth in claim 1,
wherein priority rank is defined in advance with respect to the plural unit control information,
thus to carry out generation of the set in accordance with the priority rank, and release of the set thus generated in accordance with rank opposite to the priority rank.

5. The network control method as set forth in claim 1,
wherein the sets for respectively controlling plural respective equipments to be controlled are individually generated every the respective equipments to be controlled, or are generated in the state where they are subdivided into sets consisting of unit control information that the respective equipments to be controlled share and other sets.

6. A network control apparatus adapted for controlling plural equipments caused to be of the network structure,
the apparatus comprising:
storage means for storing plural unit control information to execute function of minimum unit of control;
acquisition means for acquiring required control content through the network;
set generating means for generating set of desired unit control information from the plural unit control information stored in the storage means in correspondence with the acquired and required control content; and
control means for controlling the equipments to be controlled on the basis of the set of the unit control information.

7. The network control apparatus as set forth in claim 6,
wherein the set generating means is operative so that only when control of the equipment to be controlled is started, it generates the set in correspondence with the required control content, and when control of the equipment to be controlled is completed, it releases the set.

8. The network control apparatus as set forth in claim 6,
wherein the set generating means carries out, during execution of control of the equipments to be controlled, new generation of the set and release of the set newly generated as occasion demands.

9. The network control apparatus as set forth in claim 6,
wherein the set generating means defines in advance priority rank with respect to the plural unit control information to carry out generation of the set in accordance with the priority rank and release of the set thus generated in accordance with rank opposite to the priority rank.

10. The network control apparatus as set forth in claim 6,
wherein the set generating means generates the sets for respectively controlling plural respective equipments to be controlled individually every the respective equipments to be controlled, or generates the sets in the state where they are subdivided into sets consisting of unit control information that the respective equipments to be controlled share and other sets.
